# EUROPEAN PATENT SPECIFICATION

(11) **EP 4 096 827 B1**
(45) Date of publication and mention of the grant of the patent: **24.01.2024**
(21) Application number: 21703591.4
(22) Date of filing: 28.01.2021
(51) Int. Cl.: B01L 3/00, B01D 11/04

(54) **METHOD FOR SEPARATION OF COMPONENTS OF A SAMPLE**
VERFAHREN ZUM TRENNEN VON BESTANDTEILEN EINER PROBE
PROCÉDÉ DE SÉPARATION DE COMPOSANTS D'UN ÉCHANTILLON

(30) Priority: 31.01.2020 CZ 202037201 U; 31.01.2020 CZ 202004700 U
(43) Date of publication of application: 07.12.2022
(73) Proprietor: Ustav hematologie a Krevni Transfuze Praha, 12800 Praha 2 (CZ)
(72) Inventor: VYORAL, Daniel, 12000 Praha 2 (CZ); KRIJT, Matyas, 15800 Praha 5 (CZ)
(74) Representative: Harber IP s.r.o.
(86) International application number: PCT/CZ2021/050011
(87) International publication number: WO 2021/151405

(56) References cited:
- CZ-U1- 34 999
- US-A1- 2005 019 905
- US-A1- 2008 020 446
- US-B1- 6 537 502
- US-B1- 7 276 158

## Description

### Field of Art

The present invention provides method for separation of components of samples, particularly suitable for low volume samples.

### Background Art

Chromatographic separation and liquid-liquid separation are commonly used methods in preanalytical preseparations, and preparative analytical processes. For the purposes of microsynthesis, during the screening of chemical libraries, for the analysis of very small samples or for the extraction of analytes from complex samples, it is desirable to process the samples in lowest possible volumes.

Chromatographic columns are packed with sorbent, which is kept in the column by a porous or selectively permeable barrier such as a frit, filter or membrane. The barrier prevents an outflow of the sorbent from the column together with the elution liquid. Similarly, a barrier is utilized by any separation method involving the presence of a solid phase.

A porous barrier, such as a frit, filter or membrane, always represents a large sorption surface and considerable dead volume that can affect and irreversibly bind or sorb a significant portion of the treated or analyzed sample. That poses major problems especially for low volume samples in terms of large reduction of sample yield or bias of the analysis.

To perform chromatographic liquid separation it is required to apply pressure forces, which include the application of overpressure, vacuum (negative pressure) or centrifugal force. The centrifugal force is commonly applied in chromatographic separation by spin microcolumns.

The negative effects of the barrier (frit/filter/membrane) are significantly manifested in very rare low volume samples, where the dead volume may even outweigh the sample volume and the large sorption surface may bind a substantial portion of the sample by adsorption. Suppliers commonly offer equipment suitable for volumes starting from 10 µl, separated on sorbents with a diameter of 40 µm. No suitable devices are currently available for submicrolitre sample volumes.

In the preseparations and separations in the liquid-liquid systems such as liquid-phase microextraction (LPME), dispersive liquid-liquid microextraction (DLLME), hollow-fiber or membrane liquid-liquid microextractions, single-drop microextraction (SDME), solidification of floating organic droplet (SFOD), ultrasonic-, vortex-, microvawe- and air-assisted DLLME small sample volumes and parallel sample processing present also a complication. Separation of immiscible phases in a current liquid-liquid systems are essentially manual and serial techniques precluding parallel processing of many low volume samples..

A document WO 01/07138 describes a device comprising a perforated bottom container for separating a liquid phase of a low volume sample from a solid phase, wherein the solid phase may be a chromatographic sorbent.

US 7276158 B1 describes a device used for sample purification or separation, the device comprising a pipette tip designed to perform filtration or sample separation on the basis of one or more perforations, holes or incisions performed on the tip. Such perforations, holes or incisions are large enough to permit the passage of fluids or smaller particles, but small enough to block the passage of solid materials or larger particles, such as those comprising chromatography media. Such a pipette tip can thus be used for the filtration or separation of samples without the use of a filter, secondary solid matrix or any other components needed to hold chromatography media and other solid matrices within the pipette tip during the separation process.

US 2005/0019905 A1 describes methods and apparatus for performing protein purifications using affinity beads located in a plurality of wells. Each well comprise a permeable bottom or side walls for holding the beads. During purification, the wells may be immersed in a lysate one or more times until the binding of the protein to the affinity beads is complete. A flow of wash solution is then passed through the beads and through the permeable walls of the wells to wash the beads. A flow of elution solution may then be passed through the beads and the well walls to complete the purification process before the purified sample is collected.

However, no device for handling small-volume liquid-liquid systems has been invented.

### Disclosure of the invention

The present invention provides a method for the separation of components of a sample, particularly suitable for pressure separation of immiscible liquid systems, optionally in combination with other separation methods. The method uses a device that contains at least one first chamber with a V- or U-shaped bottom, which is perforated by at least one aperture with a diameter within the range of 1 to 100 micrometers (µm), preferably 1 to 40 µm, and at least the surface of each aperture is hydrophilized or hydrophobized. The device further contains a second (lower or the lowest) chamber surrounding the outside (i.e., the external surface) of the bottom of the first (upper) chamber.

The aperture in the first (upper) chamber is located at the tip or at the lowest point of the V- or U-shaped bottom. In this case the device is then suitable for use in swing rotor centrifugation, or for applying overpressure or vacuum (negative pressure ) as a pressure force to stimulate sample flow. In an alternative embodiment of the device, the aperture in the upper chamber is located in a different position than at the tip or lowest point of the V- or U-shaped bottom. This embodiment of the device is suitable for use in angular rotor centrifugation, and the aperture is located at a point on the surface of the first (upper) chamber where the pressure force is highest during angular rotor centrifugation. Both embodiments can be combined to provide devices with variable applicability as further described.

The apertures represent passages through the wall of the first chamber. The apertures can be described as being capillary apertures. The surface of the aperture is the surface of the passage through the wall of the first chamber. In a preferred embodiment, the first chamber comprises 1 to 20, preferably 1 to 10, apertures.

The physical dimensions of the aperture in the bottom of the first chamber result in capillary properties, so that surface tension or steric restraint allows the permeation of only one of the liquids from the system (or the permeation of elution liquid in the case of chromatography sorbent elution) when a force (e.g. within the range of 1 to 10,000 g) is applied. The aperture may have a homogeneous diameter (the same diameter along the entire length of the capillary aperture), or it may not have a homogeneous diameter (thus the diameter changes in different sections of the length of the aperture). For example, the diameter of the aperture may be conical with a V- or U-shaped outlet at the lowest point of the first chamber. In the case of an inhomogeneous aperture diameter, the disclosed range of diameter sizes of the aperture corresponds to the smallest aperture diameter. The bottom of the first chamber is surrounded by a second chamber so that the outlet of the aperture leads into the second chamber.

The aperture in the bottom of the first chamber can be manufactured by physical, chemical or mechanical perforation, including but not limited to such means as penetration by a sharp object (e.g. a needle), by thermoshock (induced e.g. by cooling with liquid nitrogen or by rapid heating), by etching, by radiation in combination with chemical etching, by focused ionizing beam (e.g. electron beam lithography technique). The aperture may also be manufactured during the process of producing the first chamber by inserting a mandrel into a mold for casting or injecting the material forming the first chamber, or by a method of additive manufacturing (e.g. 3D printing).

The volume of the first chamber may preferably be of up to 10 ml, more preferably up to 5 ml or up to 2 ml, even more preferably in the range of 0.1 to 1000 µl.

The first chamber may be closable e.g. by a lid, a membrane or a foil.

At least the surface of the apertures in the first chamber must be hydrophilized or hydrophobized. In a preferred embodiment, also the inner surface of the bottom of the first chamber is hydrophilized or hydrophobized, wherein the inner surface of the bottom means at least the area of the inner surface of the chamber which contains the said at least one aperture. In another embodiment also the inner wall of the first chamber is hydrophilized or hydrophobized.

In some embodiments, the hydrophilization or hydrophobization means herein a surface treatment of the surface to be hydrophilized or hydrophobized. In some embodiments, the hydrophilization or hydrophobization includes incorporation of an auxiliary material into the material forming the surface or the chamber in order to increase hydrophilicity or hydrophobicity, respectively. The surface properties of the aperture in the first chamber are essential for the separation properties of the device used in the liquid-liquid separation mode. A hydrophobic surface of the aperture retains in the first chamber the hydrophilic fraction of a solution to be separated or, vice versa, a hydrophilic surface of the aperture retains in the first chamber the hydrophobic fraction of a solution to be separated.

Increasing the hydrophobicity or hydrophilicity, respectively, of a material may involve applying a hydrophobic or hydrophilic (respectively) coating; or chemical or physical treatment of the material (e.g. by laser or plasma); or application of a fabric with hydrophobic or hydrophilic properties onto the surface of the aperture and/or onto the surface of the bottom and/or onto the inner surface of the first chamber. Hydrophobic or hydrophilic, respectively, coatings as well as materials suitable for forming such coatings are known and commercially available to those skilled in the art. Examples of possible modifications are:
- hydrophobization using polytetrafluoroethylene (PTFE), dimethyldichlorosilane in 1,1,1-trichloroethane, or octadecylamine; or
- hydrophobization using material with superhydrophobic properties such as tetraethylorthosilicate (TEOS) coating, in the form of nanoparticles (e.g., silica, fumed silica, carbon black, TiOz) and styrene-*b*-(ethylene-*co*-butylene)-*b*-styrene coating or bilayer coatings composed of a first layer similar to monolayer coatings adjusted with additional packing film, nanoparticles or compound (fatty acid, polymers, hydrocarbons, fluorocarbons) representing a second layer ;
- hydrophilization using polydopamine, O-(2-aminoethyl)-O'-[2-(tert-butoxycarbonyl)amino)ethyl] hexaethylene glycol, dopamine and polyethyleneimine, chemical attachment of a hydrophilic group such as an amino, hydroxy, or sulphate group, coating the surface with a hydrophilic material or with a surfactant with hydrophilic groups (e.g. albumin)
- hydrophilisation using superhydrophilic layer represented by silica thin film containing Ti-, V-, Cr-, Mo-, and W-oxide, or polydopamine/sulfobetaine methacrylate polymerisation coating, or TiOz nanoparticles exposed to UV irradiation, TiO₂-polydimethylsiloxane or multilayer of cationically modified silica nanoparticles, or copolymerization of the material with a hydrophilic polymer, surface treatment by UV radiation (i.e. UV-induced photografting), plasma discharge or ionizing radiation (e.g. by neutrons).

Separation methods demanding switching of hydrophobic and hydrophilic surface properties can be performed by utilization of versatile materials (e.g. TiOz, ZnO, TiO₂/poly(methyl methacrylate), TiOz - SiO₂/polydimethylsiloxane, poly(N-isopropylacrylamide), dendron thiol 2-(11-mercaptoundecanamido)benzoic acid attached to film of gold, (16-mercapto)hexadecanoic acid (2-chlorophenyl)diphenylmethyl ester attached to film of silver). Hydrophilic and hydrophobic properties of such materials and compounds can be altered by electric potential, temperature, pH or UV irradiation.

If needed, surface modification may require a prior surface activation or adjustment. Surface activation may be performed by chemical modification (strong oxidizing compounds, hydrolysis, aminolysis), electrochemical modification or physical method (e.g. piezobrush^{®} PZ2, plasmabrush^{®} PB3). Surface adjustment may include incorporation of compounds, layers or films (e.g. gold, silver, ZnO, TiO₂, dopamine, etc.) in order to modify hydrophobic or hydrophilic properties or to provide a surface suitable for further modification by addition of compounds, layers or films.

If needed, microstructures or hierarchical structures may be provided on the surface. Micro- or nano-roughness of the surface can be achieved e.g. by high power oxygen. Multiple level hierarchical structures include e.g. micropits, spikes or pillar-like microstructures covered with nanobumps structure. Microstructures and hierarchical structures critically influence the hydrophobic and/or hydrophilic properties of materials.

The material of the chambers is preferably plastic, in particular polycarbonate; polyolefins such as polyethylene (PE), polypropylene (PP); polystyrene (PS); polyvinyl chloride (PVC); fluorinated polymers, such as Teflon (polytetrafluorethylene - PTFE).

The chamber material preferably has elasticity in the range of 0.01 to 8.5 GPa (Young's elasticity modulus).

The first and the second chambers may be specially produced to form the device used in the invention.

Alternatively, the device may be assembled from commonly available components which can serve as the first and second chambers, wherein at least one aperture is manufactured in the component forming the first chamber, which is hydrophilized or hydrophobized. Such commonly available components are, for example, Eppendorf-type tubes.

The second chamber surrounds the bottom of the first chamber from the outside. The first chamber can be resealable to prevent contamination of samples from the environment or cross-contamination between samples during separation, as well as sample evaporation, which is very undesirable in the case of low volume samples.

In a preferred embodiment, at least one ventilation opening can be provided in the device in the first and/or second chamber. These ventilation openings prevent the formation of undesired vacuum and/or overpressure during separation. In the first chamber the ventilation opening may be present in the side wall or in the closure. In the second chamber the ventilation opening may be present in the side wall of the chamber.

In the device used in the invention, the chambers are connected in such a way that at least the bottom of the first chamber is surrounded on the outside by the second chamber, so that the liquid flowing out of the aperture in the bottom of the first chamber flows into the second chamber. The chambers can also be connected in a gas-tight way, e.g. to create an overpressure which can define the volume of fluid flowing through the aperture.

In a preferred embodiment, the device may include a plurality of first chambers and a plurality of second chambers, which allows a plurality of separations to be performed in parallel and/or simultaneously. This arrangement is hereinafter referred to as a "parallel arrangement". The first chambers may be arranged in one holder to form a first chamber system and the second chambers in another holder to form a second chamber system, and the first chamber system is inserted into the second chamber system. Optionally, multiwell plates placed on top of each other may be used, with apertures being formed in the bottoms of the wells of the first plate forming the first chambers, and the plates being then placed on top of each other so that the wells of the second plate surround the wells of the first plate from the outside.

For example, the multiwell plates may contain 6, 12, 24, 48, 96, 384, 1536, 3456 wells, but the number of the first and the corresponding second chambers may also be arbitrary. The dimensions and arrangement of the wells of commercially available multiwell plates are standardized and therefore suitable for automatic handling by existing automatized handling systems (e.g., lab robots) and software. For parallel separations it is advantageous to ensure that the apertures in the bottoms of all wells forming the first chambers are substantially identical.

In some embodiments, the device may also include a plurality of first chambers inserted into each other. Thus, when using N first chambers, (N-1) first chambers surround the bottom of the previous first chamber in the direction of liquid flow. This allows the sample to be applied to one first chamber, and upon application of pressure, the sample passes successively through all the other first chambers. The last first chamber in the direction of liquid flow is inserted into the second chamber, i.e. at least its bottom part is surrounded by the second chamber. This results in a gradual separation of the sample or a gradual sorption of various components of the sample and separation of various components of the liquid-liquid system in the various first chambers. This arrangement is hereinafter referred to as a "serial arrangement".

At least one of the first chambers in the serial arrangement is the first chamber including the hydrophilized or hydrophobized surface of at least the aperture(s) as described above. Further first chambers may be chambers with a V- or U-shaped bottom, at least one aperture with a diameter in the range of 0.1 to 100 µm, preferably 1 to 40 µm, located at the V-tip or the lowest U-shaped point, with or without surface treatment in at least part of the inner surface.

The treatment in at least part of the inner surface includes the presence of separation means on at least the surface of the aperture, these separation means may be for example antibodies; affinity, hydrophobic, hydrophilic, ionic or chelating agents; magnetic components; or components based on imprinted polymers; optionally a combination of the aforementioned means and properties may be provided. The separation means bind specifically at least one component of the sample upon use of the device.

The separation means may be present on at least one capillary aperture, on the inner surface of the bottom of the first chamber or on the entire inner surface of the first chamber.

When the chamber does not contain any separation means, it is usually intended to fill them with a particulate sorbent, such as a sorbent suitable for solid phase extraction (SPE).

The particulate sorbent may be any sorbent suitable for sample separation. Examples of particulate sorbents include sorbents used for gel filtration, ion exchange, hydrophobic, affinity, or metal chelate affinity chromatography, or for the technique of molecular imprinted polymers; more specific examples of sorbents are listed in Table 1.

**Table 1. Examples of solid phase extraction sorbents and their properties.**

| **Type of SPE phase** | **Name** | **Properties** |
|---|---|---|
| Reverse | DSC-18, LC-18 | Separation of polar compounds |
| | ENVI-18 | Separation of polar compounds, resistant to extreme levels of pH |
| | LC-8 | Separation of weak polar compounds |
| | ENVI-8 | Separation of polar compounds, resistant to extreme levels of pH |
| | LC-4 | Separation of less polar compounds then applied on LC-8 and LC-18 |
| | HiSep | Protein decontamination from the sample |
| | DSC-Ph | Affinity to aromatic compounds |
| | DCS-CN | Separation of hydrophobic and weak polar compounds and weak cation exchange |
| | DPA-6S | Sorption of polar compounds with hydroxyl group |
| Normal | LC-diol | Separation of polar compounds |
| | LC-NH₂ | Separation of polar compounds, weak anions exchange |
| | DSC-Si | Separation of structurally similar compounds |
| | | |
| Ion exchange | DSC-NH₂ | Based on pH - exhibits the properties of a weak and/or weak polar substance |
| | SAX | Weak anion extraction |
| | SCX | Exchange of strong cations |
| | WCX | Exchange of weak cations |
| | MCAX | Basic compounds isolation |
| | Sephadex-SP | Exchange of weak cations |
| | Sephadex-CM | Exchange of strong cations |
| | Sephadex-DEAE | Exchange of weak anions |
| | Sephadex-QAE | Exchange of strong anions |
| Adsorption | LC-Si | Polar compounds isolation |
| | ENVI-Florisil | Strong adsorption of polar compounds from non-polar matrices |
| | Alumina-A | Anion exchange and polar compound adsorption in acid pH |
| | Alumina-B | Cation exchange and polar compound adsorption in basic pH |
| | Alumina-N | Polar compound adsorption and cation and anion exchange in neutral pH |
| | ENVI-Carb | Adsorption extraction of polar and nonpolar compounds |
| | ENVI-ChromP | Aromatic polar compounds extraction from water solutions |
| Size exclusion/porous | Sephadex | Molecular weight base separation/size exclusion |
| | Sephacryl | Molecular weight base separation/size exclusion |
| | Silicagel | Molecular weight base separation/size exclusion |
| | Poros | Molecular weight base separation/size exclusion |
| Imprinted | SupelMIP | Extraction of one or a group of similar compounds in a complex matrix |
| Combined | Supelclean | Properties of silica gel combined with surface treatments from the phase category: reverse, normal, ion exchange, absorption |
| | Amberlite XAD4 | Polar compounds separation |
| | Amberlite XAD7 | Weakly polar compounds separation |
| | Amberlite XAD-4, -16, - 1180,-2000 - 2010 | Polar compounds separation |
| Magnetic | Silicabeads | Combination of surface treatment properties and magnetic separation |

In some embodiments, the device may contain a plurality of first chambers and a plurality of second chambers, which are arranged in a parallel arrangement of a plurality of serial arrangements, wherein each serial arrangement contains a plurality of first chambers and one second chamber. Thus, the embodiments contain a matrix of second chambers, wherein each second chamber holds a column of first chambers inserted one into another.

Such embodiment enables parallel separation of a plurality of samples, wherein each sample is subjected to the same separation conditions and passes through the device at the same time. At least one of the first chambers in each serial arrangements contains the hydrophilized or hydrophobized aperture(s) as described above. The other first chambers may be as described herein above for the serial arrangement of the device.

The present invention provides a method for separation of components of a sample in a liquid-liquid system performed in the device described herein above, comprising the following steps:
- introducing a system containing immiscible liquids into a first chamber with a hydrophilized or hydrophobized surface of at least the aperture of the first chamber, or into an arrangement of a plurality of first chambers, wherein at least one of the first chambers has a hydrophilized or hydrophobized surface of at least the aperture,
- introducing a fluid sample (i.e. a liquid sample or a gas sample) into the first chamber; this step can be performed together with the step of introducing the system containing immiscible liquids or subsequently to the step of introducing the system containing immiscible liquids, or prior to the step of introducing the system containing immiscible liquids,
- optional step of emulsification (e.g. by sonication bath) and subsequent phase stabilization (especially when the fluid sample is introduced separately (prior to or subsequently) from the system containing immiscible liquids),
- application of pressure force on the system in the first chamber causing the liquid fraction having the same chemical hydrophilic or hydrophobic nature, respectively, as the hydrophilic or hydrophobic nature of the aperture surface, respectively, to pass through the aperture into the next chamber, and causing the retaining of the liquid fraction having the opposite chemical hydrophilic or hydrophobic nature, respectively, than the hydrophilic or hydrophobic nature of the aperture surface, respectively.

The pressure force here includes overpressure, vacuum (negative pressure), centrifugal force, or gravitational force. The pressure force acts on the system in the first chamber in the direction towards the aperture. The pressure force can be caused, for example, by overpressure in the first chamber, vacuum (negative pressure) in the next chamber (first or second), or by centrifugal or gravitational force acting on the whole device.

The pressure force acts towards the bottom or wall of the first chamber so that the sample is pushed towards the aperture in the bottom or wall of the first chamber, and the respective fraction of the sample (with the same hydrophilic/hydrophobic nature as the nature of the aperture and optionally its surrounding area) passes through this aperture into the second chamber. The pressure force can be applied as an overpressure from above, e.g. by means of a piston, as a vacuum (negative pressure) using a vacuum (low pressure) in the next or second chamber, or as a gravitational or centrifugal force when centrifuging the device, the centrifugal force acting towards the aperture in the bottom of the first chamber. Conventional laboratory centrifuges or microcentrifuges can be used in the centrifugation step.

The analyte can be of liquid, solid or gas nature. The sample may contain a liquid substance, a mixture of liquid substances, a liquid solution of solid substances, a liquid solution of a mixture of solid substances, a liquid solution of a liquid substance, a liquid solution of a mixture of liquid substances, or a liquid solution of a mixture of solid and liquid substances. Furthermore, analytes can be absorbed from gas phase into the liquid sample, or a gas sample may be introduced directly into the first chamber. Optionally, the fluid sample (i.e. liquid or gas sample) may be an eluent extracting analytes from a sorbent, or gas or liquid component(s) from a previous separation step.

When a serial arrangement of chambers of the device is used, the sample and the system of immiscible liquids are introduced into the topmost first chamber, and a pressure force is generated in order to make the sample pass sequentially through all the first chambers into the second chamber, in which the last fraction of the sample is retained. The first chambers without hydrophilic/hydrophobic modification are usually filled with a solid phase sorbent or have separating means provided at least on the surface of the aperture and/or onto the surface of the bottom and/or onto the inner surface of the first chamber (the separating means including e.g. antibodies, affinity, hydrophobic, hydrophilic, ionic or chelating agents, magnetic components, or components based on imprinted polymers, or combination thereof). The individual fractions (or components) of the sample are gradually separated in the first chambers by application of various separation means or a solid phase sorbent, while at least one first chamber causes the separation of a system of immiscible liquids based on hydrophilized or hydrophobized aperture surface.

The separation described above takes place simultaneously for all samples when a parallel arrangement of chambers or a parallel arrangement of serial arrangements of chambers is used.

The device of the invention has a construction which does not require the presence of a frit, filter or membrane, while still selectively separating components (or fractions) of samples based on (inter alia) hydrophobic and hydrophilic properties. The device of the invention enables flow of the sample and the liquid system in which the sample occurs through the device, wherein fractions of the sample are retained in the first chamber(s), until the last sample fraction flows into the second chamber. Such device, in comparison to similar available devices, eliminates complications such as the existence of dead volume, prevents disruption of the separation process and increases the yield of the separation. Additional advantages of the device in comparison to commercially available devices include simplification of the production due to the absence of frit, filter or membrane, simple production of devices allowing parallel separations of a plurality of samples (also in serial arrangement). The absence of a frit, filter or membrane further avoids irreversible binding of sample fractions and avoids interference with the separation process which are common in known devices. Thus the device of the invention enables processing of samples with volumes in the order of nanolitres, including parallel processing of tens to thousands of samples.

### Brief description of drawings:

Figure 1 schematically shows a basic embodiment of the device with one first chamber and one second chamber.
Figure 2 schematically shows an example of a serial arrangement of the device with a plurality of first chambers and one second chamber.
Figure 3 schematically shows examples of the location of the ventilation opening.
Figure 4 schematically shows an example of a parallel arrangement of the device with the same number of first and second chambers.
Figure 5 schematically shows an example of a parallel arrangement of serial arrangements of chambers.
Figure 6 schematically shows separation of a mixture of three immiscible liquids in a device shown in Fig. 1.

### Detailed description of the invention

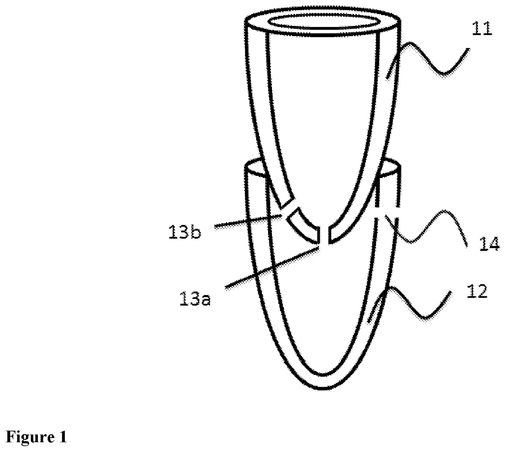

Examples of various embodiments of the device used in the invention are shown in Figures 1 to 6.

Fig. 1 shows a basic embodiment of the device with a first U-shaped chamber 11, the bottom of the first chamber is surrounded by a second chamber 12. The first chamber 11 has an aperture 13a located at the lowest point of the U-shape if intended for use for centrifugation using a swinging rotor and/or an aperture 13b located at a point in the surface of the upper chamber where the pressure force is highest during centrifugal rotor centrifugation when intended for use in centrifugation using an angular rotor. The aperture size typically ranges from 1 to 100 µm in diameter. At least the surface of the aperture is hydrophilized or hydrophobized. Hydrophilization or hydrophobization means a surface modification or incorporation of material, fabric and/or compound in order to increase hydrophilicity, respectively hydrophobicity of the initial material. At least one ventilation opening 14 may be present in the second chamber 12 when the compensation of pressure changes caused by the flow of a sample fraction into this chamber during the separation is required. In this embodiment, the first chamber 11 is not sealed, therefore the pressure equalizes due to open top of the first chamber and a ventilation opening is not needed.

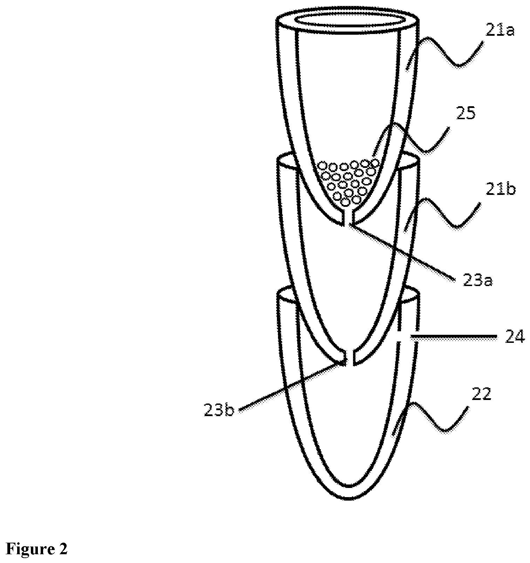

Figure 2 shows an example of a serial arrangement of the device with first chambers 21a, 21b which are provided with apertures 23a and 23b. The upper first chamber 21a is inserted into the lower first chamber 21b, and the lower first chamber 21b is inserted into the second chamber 22. The second chamber 22 is provided with a ventilation opening 24. In the upper first chamber 21a is a solid sorbent 25, while the lower first chamber 21b has a hydrophilized or hydrophobized at least the surface of the aperture 23b.

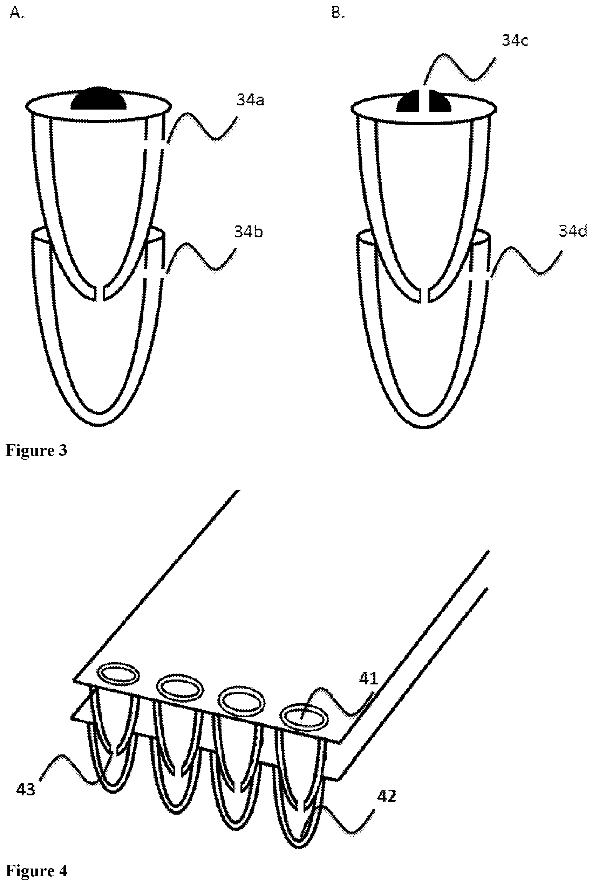

Figure 3 shows examples of the ventilation opening location. In embodiment A, the ventilation opening 34a is located in the sidewall of the first chamber, which is in this embodiment closed by a lid, and another aperture 34b is provided in the second chamber. In embodiment B, the upper chamber is also closed with a lid, and a ventilation opening 34c is provided in the lid, and another ventilation opening 34d is provided in the sidewall of the second chamber.

Figure 4 shows schematically an example of a parallel arrangement of the device with first chambers 41 with apertures 43 and second chambers 42. The chambers may, for example, be constructed as described in Fig. 1.

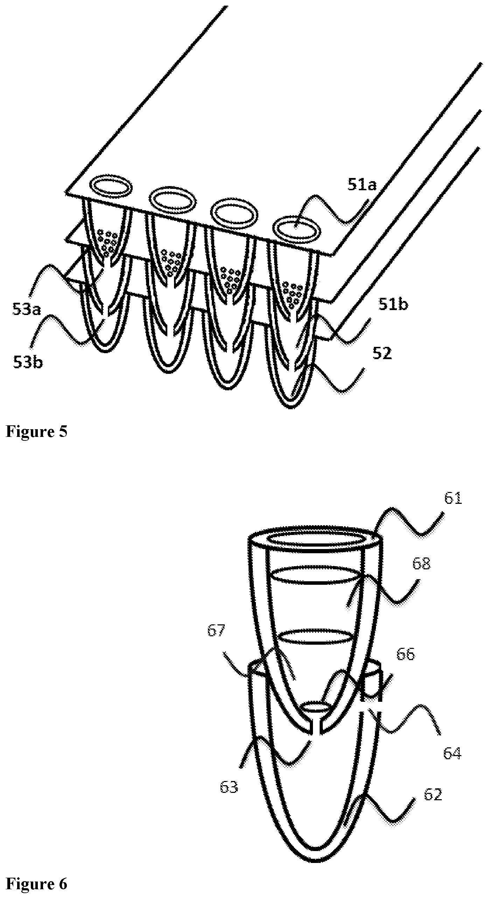

Figure 5 shows schematically an example of a parallel arrangement of serial arrangements of chambers, wherein upper first chambers 51a with apertures 53a are arranged in parallel, with a corresponding number of lower first chambers 51b with apertures 53b also arranged in parallel, and with second chambers 52 arranged in parallel. In the upper first chambers 51 are provided particles of solid sorbent (representing any other separating method mentioned above), and the lower first chambers 51b have at least the surface of the aperture hydrophilized or hydrophobized.

Figure 6 schematically shows the separation of a mixture of three immiscible liquids on a device according to Fig. 1. Immiscible liquids 66, 67, 68 are placed in a first chamber 61 having at least the surface of an aperture 63 hydrophilized or hydrophobized. Thus, only a liquid of the same chemical nature can pass through the aperture 63 (i.e. a hydrophilic liquid passes through a hydrophilized aperture, and a hydrophobic liquid passes through a hydrophobized aperture) under the action of a pressure force. The liquid passing through the aperture 63 of the first chamber flows into the second chamber 62, where it is captured and retained. The ventilation opening 64 equalizes pressure in the second chamber 62 with the pressure of the surrounding environment (if required). Without the ventilation opening 64, the pressure in the second chamber would increase due to the volume of liquid incoming from the first chamber 61.

### Examples

### Example 1

The bottom of the first chamber 11 of the device according to Fig. 1, wherein the first chamber is formed by a polypropylene PCR microtube PCR-02-C, 200 µl, Axygen, was perforated with an aperture with external dimensions of 20x2 µm. The thus prepared capillary aperture 13a was then hydrophobized by silanization (pressure perfusion of the capillary aperture with 100 µl solution of dimethyldichlorosilane in 1,1,1trichloroethane). After drying (24h, at RT), the bottom of the first chamber 11 was covered with Parafilm foil and 10 µl of a solution containing liposoluble Sudan B dye (Sigma, 0.1 mg/ml) in chloroform and 170 µl of PBS (saline, phosphate buffered saline, 140 mM NaCl, 10 mM HEPES, pH 7.4) was added. The first chamber closed with a lid (according to Fig. 3) was vortexed for 1 min. Subsequently, the Parafilm foil was removed from the first chamber 11 of the device, and the first chamber was then inserted into the second chamber 12 provided with a ventilation opening 34b for pressure equalization (according to Fig. 3). The embodiment of the device according to Fig. 1 was centrifuged at room temperature for 3 minutes at a centrifugal force of 100 x g in a swinging rotor. The inspection revealed that 5 µl of Sudan B solution in chloroform had passed into the second chamber 12 and the colorless aqueous phase remained quantitatively in the first chamber 11. Spectrophotometric measurements at 600 nm on Nanodrop confirmed that the chloroform phase in the second chamber contained 98% of Sudan B.

### Example 2

The bottom of the first chamber 11 of the device according to Fig. 1, wherein the first chamber is formed by a polypropylene PCR microtube PCR-02-C, 200 µl, Axygen, was perforated with an aperture with external dimensions of 20x2 µm. The thus formed capillary aperture 13a was then hydrophobized by silanization (pressure perfusion of the of the capillary aperture with 100 µl solution of dimethyldichlorosilane in 1,1,1-trichloroethane). After drying (24h, at RT), embodiment of the device according to Fig. 1 was utilized for extraction of cobalt ions in complex with 1-(2-pyridylazo)-2-naphthol (PAN, Sigma) from an aqueous solution. 170 µl of a 0.25M aqueous solution of sodium nitrate containing 30 µg/l CoCl₂ was added to 0.5 µl of a 0.001M aqueous solution of a cobalt chelator - PAN. After a few minutes, the solution turned green due to the formation of a cobalt-PAN complex. Then ethanol (7µl) and chloroform (5µl) were added. Afterwards, the sample was vortexed for 1 minute and subsequently left to reach phase separation. After centrifugation (10 g, 3 min, RT) spectrophotometric measurements were performed at 577 nm on Nanodrop showing that 2 µl of chloroform containing 92% of cobalt/PAN complex had passed into the second chamber 12.

### Example 3

A mouse liver fragment (10 mg) was added to 1 ml of a phenol/chloroform/isoamyl alcohol solution (25:24:1 v/v/v; Merck) supplemented with the lipophilic dye Nile Red (Sigma, 200 µg/ml). The sample was then homogenized by a Pelletpestle^{®} glass homogenizer (glasspestle microhomogenizer Pelletpestle^{®}, Kontes) for 1 minute at 0 °C. The lysate was transferred into a device constructed according to Fig. 2. The bottom of a conical polypropylene 1.5 ml Eppendorf tube (first chamber 21a) was perforated with six apertures 23a each with a diameter of 100 µm, and the bottom of second first chamber 21b was provided with one hydrophobized aperture 23b prepared as described in Example 2. The first chamber 21a was inserted into the first chamber 21b. These two first chambers 21a and 21b were placed above the second chamber 22 with a ventilation opening 24. The device was centrifuged for 5 min at 100 g and at 0 °C.

After centrifugation, the inspection revealed that the second chamber 22 contained an intensely red colored chloroform phase (lipid and non-degraded RNA were not measured due to interference with Nile red). The first chamber 21b, provided with a hydrophobized aperture 23b, contained an aqueous phase (the total amount of DNA in this phase measured spectrophotometrically was 1 µg). The protein precipitate at the bottom and in the apertures of the first chamber 21a was analyzed (total of 95 µg, measured after dissolving the precipitate in a buffer containing sodium dodecyl sulfate by the BCA kit, Pierce).

### Example 4

A blood sample was taken from a healthy volunteer into Vacutainer 4 ml Li-Hep tube and washed twice with 20 ml of PBS (2000 g, 10 min, RT). Then, an equal volume of PBS containing 100 mM sodium bisulfite and 100 mM dithionite was added to the blood cell column. The embodiment of the device according to Fig. 2, wherein the bottom of the first chamber 21 represented by the polypropylene PCR microtube PCR-02-C, 200 µl, Axygen, was perforated with an aperture 23a with external dimensions of 20x2 µm. The formed capillary aperture was then hydrophilized with a layer of dopamine and polyethyleneimine (PEI, J. Mater. Chem. A, 2 (2014) 10225-10230). Dopamine hydrochloride (Sigma-Aldrich H8502) and PEI (Sigma-Aldrich product 408719, Mw 600 Da) were dissolved in buffer containing Tris(hydroxymethyl)aminomethane (pH=8.5, 50 mM) both in a concentration of 2 mg/ml. Hydrophilization of the surface of the aperture 21a was performed with 1 ml of the prepared solution by pressure perfusion of the capillary aperture. After drying (24h, at RT), the bottom of the first chamber 21a was covered with Parafilm and 50 µl of a red blood cell suspension was added into the first chamber 21a. Then, the sample was exposed to a carbon monoxide atmosphere for 60 minutes at room temperature using a COgen system (Sigma-Aldrich Product No. 744077). The cells were then lysed by adding 5 µl of 20% (w/w) solution of Triton X100 detergent in PBS. Measurement of a 5 µl aliquot of blood cells in a Nanodrop spectrophotometer at 420 and 432 nm (Clin. Chem. 30/6 (1984) 871-874) showed that exposure to CO gas caused the conversion of 98% hemoglobin in the lysate to carbonyl hemoglobin (COHb). Subsequently, the embodiment of the device included a cascade of three inserted PCR tubes (21a, 21b and 22) - the upper first chamber 21a contained a lysate of red blood cells (Parafilm foil was removed), the lower first chamber 21b (perforated at the bottom with the aperture 23b) contained a 120 µl column of DEAE sorbent. Sephadex A-50 (Sigma-Aldrich, product GE17-0180-02) was equilibrated in 0.01 M sodium phosphate buffer pH 7.5 by five times repeated centrifugation at 1000 g for 3 min at 20 °C and adding 50µl of equilibration solution before each centrifugation. The non-perforated second chamber 22 as a collection chamber. This system was centrifuged at 1000 g, for 3 min, at 4 °C. The premise and purpose of this arrangement was that the hemoglobin present in the blood cell lysate would be cleared of contaminating hydrophobic parts of the sample (hydrophobic parts of membranes, membrane proteins) remaining in the first chamber 21a (verified by SDS-PAGE), and most non-hemoglobin proteins of the lysate remained bound to the DEAE-Sephadex A-50 sorbent present in the middle tube 21b (Analytical Biochemistry 137 (1984) 481-484). This assumption was verified by non-denaturing electrophoretic analysis of proteins present in aliquots of the solution taken from the first chamber 21a and the second chamber 22, revealing that only hemoglobin was detected in the second chamber 22.

### Example 5

A blood sample was taken from a healthy volunteer into Vacutainer 4 ml Li-Hep tube and washed twice with 20 ml PBS (2000 g, 10 min, RT). Then, an equal volume of PBS containing 100 mM sodium bisulfite and 100 mM dithionite was added to the blood cell column.

The embodiment of the device according to Fig. 1, where the bottom of the first chamber 11 formed by a polypropylene PCR microtube PCR-02-C, 200 µl, Axygen, was perforated with an aperture 13a with external dimensions of 20x2 µm. The prepared capillary aperture 13a was then hydrophobized by silanization (pressure perfusion of the capillary aperture with a 100 µl solution of dimethyldichlorosilane in 1,1,1-trichloroethane). After drying (24 h, at RT), the bottom of the first chamber was sealed with Parafilm foil and 50 µl of red blood cell suspension was pipetted into the first chamber. The blood cells were then lysed by adding 25 µl of 95% ethanol and 30 µl of chloroform while shaking the device (with the first chamber 11 covered with Parafilm foil) on a shaker (VortexGenie.2 mixer) 2 min at RT. This method of red blood cells lysis caused selective denaturation of hemoglobin, the most abundant protein present in the lysate (Chemosphere 88 (2012) 255-259). After removing the Parafilm foil and centrifuging the device at 100 g at 4 °C, we verified by non-denaturing electrophoresis that only non-hemoglobin proteins were retained in the first chamber 11 (present in the aqueous phase above the denatured hemoglobin precipitate layer). In the second chamber 12 we observed approximately 25 µl of chloroform phase, where it is possible to further analyze the extracted lipids of blood cell membranes.

### Example 6

The Example 6 describes separation in a system using dispersive liquid-liquid microextraction (with lighter organic solvents than water).

The embodiment of the device according to Fig. 1, wherein the bottom of the first chamber 11 formed by the polypropylene PCR microtube PCR-02-C, 200 µl, Axygen, was perforated with an aperture 13a with external dimensions of 20x2 µm. The prepared capillary aperture was then hydrophilized with a layer of dopamine and polyethyleneimine ((PEI), J. Mater. Chem. A, 2 (2014) 10225-10230). Dopamine hydrochloride (Sigma-Aldrich H8502) and PEI (Sigma-Aldrich product 408719, Mw 600 Da) were dissolved in a buffer containing Tris (hydroxymethyl) aminomethane (pH = 8.5, 50 mM), both at a concentration of 2 mg/ml. Hydrophilization of the surface of the aperture 13a with this solution was performed by pressure perfusion of the capillary aperture with a volume of 1 ml. After drying (24h, at RT), the bottom of the first chamber 11 was covered with Parafilm foil and 160 µl of a solution containing phenol (10 µg/ml, product 35952 Sigma-Aldrich) in MilliQ-deionized water was pipetted into the first chamber 11. 5 µl of extractant represented by 1-octanol (product 95446, Sigma-Aldrich) was then added. The first chamber was closed with a lid and shaken (VortexGenie.2 mixer) for 60 seconds at RT. Subsequently, the Parafilm foil was removed from the device and the device was centrifuged in a swinging rotor at RT for 3 minutes at 100 g. The analysis of first and second chamber content showed that the second chamber captured 160 µl of MilliQ-deionized water, while the 5 µl of 1-octanol remained in the first chamber. After reaction with ferric chloride, the 1-octanol phase was spectrophotometrically measured at 540 nm with a Nanodrop spectrophotometer. The result, based on the concentration curve of the absorbance of the phenol complex with iron ions, showed that the 1-octanol phase contained 1.6 µg of phenol.

### Example 7

Microextraction using a solidified organic drop microextraction (SFODME).

The embodiment of the device according to Fig. 1, where the bottom of the first chamber 11 formed by the polypropylene PCR microtube PCR-02-C, 200 µl, Axygen, was perforated with an aperture 13a with external dimensions of 20x2 µm. The prepared capillary aperture was then hydrophilized with a layer of dopamine and polyethyleneimine ((PEI), J. Mater. Chem. A, 2 (2014) 10225-10230). Dopamine hydrochloride (Sigma-Aldrich H8502) and PEI (Sigma-Aldrich product 408719, Mw 600 Da) were dissolved in a buffer containing Tris (hydroxymethyl) aminomethane (pH = 8.5, 50 mM), both at a concentration of 2 mg/ml. Hydrophilization of the surface of the aperture 13a with this solution was performed by pressure perfusion of the capillary aperture with a volume of 1 ml and covered with Parafilm foil. Then 160 µl of ammonium metavanadate solution (1 mM NH₄VO₃, product 398128, Sigma-Aldrich) dissolved in aqueous sodium chloride solution (10 mM, pH 7) was added, followed by 5 µl of 8-hydroxychonoline solution (7 mM, product 252565 Sigma-Aldrich) in undecan-1-ol (product U1001 Sigma-Aldrich). The first chamber 11 was closed with a lid and shaken (VortexGenie.2 mixer) for 60 seconds at RT. Subsequently, the Parafilm foil was removed from the device, which was then cooled on ice and centrifuged at 100 g, for 3 minutes, at 4 °C in a swinging rotor. The inspection revealed that 160 µl of water passed into the second chamber 12, while 5 µl of the solidified phase of undecan-1-ol with extracted hydroxyquinoline-vanadium complex remained quantitatively in the first chamber 11. The contents of the first chamber 11 were warmed to room temperature, dissolved in 10 µl ethanol and measured at 383 nm on a Nanodrop spectrophotometer. Comparison of the absorbance of this sample with the concentration curve of the vanadium-hydroxyquinoline complex confirmed that approximately 8 µg of vanadium extracted from the aqueous solution into undecan-1-ol was present in the first chamber 11.

### Example 8

A device corresponding to Fig. 2 was used to analyze the lipid component from a sample of exosomes and extracellular vesicles. The upper first chamber 21a was perforated with a 20x2 µm hole and filled with 1 ml of Sephacryl S200 in PBS solution (pH 7.4). The aperture of the lower first chamber 21b was hydrophobized by silanization (pressure perfusion of a capillary aperture with 100 µl of a solution containing 2% dimethyldichlorosilane in 1,1,1-trichloroethane). After drying (24h, at RT), the aperture in chamber 21b was covered with Parafilm foil and the chamber 21b was filled with 100 µl of chloroform. A 100 µl sample of blood plasma was loaded into the first chamber 21a and the system was centrifuged at 1000 x g, for 5 min at 4 °C. Subsequently the upper first chamber 21a was removed and the lower first chamber 21b was closed with a lid. The system was shaken (VortexGenie.2 mixer) for 60 seconds at room temperature and the Parafilm foil was removed from the first chamber. After stabilization of the phases, the system was centrifuged at 100 x g, for 5 min at 4 °C. The supernatant in the second chamber 22 containing the chloroform fraction enriched in the lipid component of the samples was analyzed on an API4000 tandem mass spectrometer (AB SCIEX) with pre-separation on an Agilent HPLC 1290 series liquid chromatography (Agilent). Free cholesterol (75%) was highest, followed by sphingomyelin (8%) followed by free cholesterol esters, ceramide monohexosides, monosial gangliosides and globotetraosylceramide.

### Example 9

For gene therapy it is necessary to separate the vector contained in the plasmid DNA from the contaminating RNA. For this purpose, a device was prepared according to Fig. 1, wherein the bottom of the polypropylene PCR microtube PCR-02-C, 200 µl, Axygen was perforated with an aperture with external dimensions of 20x2 µm and surface treated by hydrophilization with a layer of dopamine and polyethyleneimine. Dopamine hydrochloride (Sigma-Aldrich H8502) and PEI (Sigma-Aldrich product 408719, Mw 600 Da) at a concentration of 2 mg/ml were dissolved in a buffer containing Tris (hydroxymethyl) aminomethane (pH = 8.5, 50 mM). Hydrophilization of the aperture surface with this solution was performed by pressure perfusion of 1 ml of the solution. After drying (24h, at RT), the aperture was covered with a layer of Parafilm foil and the embodiment of the device was set according to Fig. 1. A pooled sample of nucleic acids containing plasmid DNA and residual RNA was prepared from a bacterial lysate of the *E*. *coli* expression vector by a standard isolation method based on phenol/chloroform/isoamyl alcohol (25:24: 1 v/v/v; Merck) followed by precipitation of the nucleic acids in ethanol. 10 µl of the nucleic acid mixture was added to 90 µl of 10 mM Tris-HCl buffer pH 8 and 100 µl of the mixture containing 40 mM methyltrioctylammonium chloride, 250 mM lithium chloride and 0.5% (v/v) ethylhexanol in isooctane. The prepared sample was applied to the first chamber 11 of the device and left for 30 minutes at room temperature with gentle shaking. To accelerate the phase separation, the system was centrifuged at 2000 g, for 5 min, at RT. The Parafilm foil was removed from the first chamber 11 and the device was centrifuged at 100 g for 3 minutes in a swinging rotor. Subsequently, the aqueous phase of the sample located in the second chamber 12 was analyzed. By spectrophotometric analysis on Nanodrop, agarose gel, and using the RNAse assay, it was found that the aqueous phase contained only plasmid DNA.

### Example 10

The embodiment of the device according to Fig. 1, wherein the bottom of the first chamber 11 formed by the polypropylene PCR microtube PCR-02-C, 200 µl, Axygen, was perforated with an aperture 13a with external dimensions of 20x2 µm. The prepared capillary aperture was then hydrophilized with a layer of dopamine and polyethyleneimine ((PEI), J. Mater. Chem. A, 2 (2014) 10225-10230). Dopamine hydrochloride (Sigma-Aldrich H8502) and PEI (Sigma-Aldrich product 408719, Mw 600 Da) were dissolved in a buffer containing Tris (hydroxymethyl) aminomethane (pH = 8.5, 50 mM), both at a concentration of 2 mg/ml. Hydrophilization of the surface of the aperture 13a with this solution was performed by pressure perfusion of the capillary aperture with a volume of 1 ml of the solution. After drying (24h, at RT), the aperture was covered with Parafilm foil and the device was assembled. A solution containing 29% (w/w) PEG 1000, 9% (w/w) PBS and 10% β-phycoerythrin (Merck, P1286) was applied to the first chamber 11 of the device. After stirring for 10 minutes at RT, the device was centrifuged at 1500 g for 10 minutes. The Parafilm foil was then removed and the device was centrifuged at 100 g for 3 min in a swinging rotor. Subsequently the PEG phase from the first chamber of the device 11 and the aqueous phase from the second chamber of the device 12 were analyzed by a spectrophotometer at wavelengths of 545 nm and 280 nm. From the absorbance ratio Abs_{545 nm}/Abs_{280 nm}, it was calculated that the PEG phase contained 77% of β-phycoerythrin.

### Example 11

The bottom of Costar V-bottom polypropylene 96 well plate (Corning, NY, USA) was perforated at nine random wells 41 by apertures with external dimensions of 20x2 µm. The prepared capillary apertures were then hydrophobized by silanization (pressure perfusion of the capillary aperture with 100 µl solution of dimethyldichlorosilane in 1,1,1-trichloroethane). After drying (24h, at RT), the bottom of the thus prepared first chambers was pressed firmly against rubber sheet and 10 µl of a solution containing liposoluble dye Sudan B (Sigma, 0.1 mg/ml) in chloroform and 170 µl of PBS (saline, phosphate buffered saline, 140 mM NaCl, 10 mM HEPES, pH 7.4) was added. The well plate of first chambers was sealed and vortexed for 1 min. Then the first chambers were inserted into the second chambers 42 represented by Costar V-bottom polypropylene 96 well plate. The assembled device was centrifuged at room temperature for 3 minutes at 100 x g in a swinging rotor. The inspection revealed that 5 µl of Sudan B solution in chloroform had passed into the second chambers 42 and the colorless aqueous phase remained quantitatively in the first chambers 41. Spectrophotometric measurements at 600 nm on Nanodrop confirmed that the chloroform phase in the second chamber contained 98% of Sudan B.

### Example 12

In order to evaluate the purification of glucose-6-phosphate dehydrogenase (G6PDH) produced by S. *cerevisiae,* the device according to Fig. 1 was used, wherein the bottom of the first chamber 11 was formed by an Eppendorf tube perforated with an aperture 13a with external dimensions of 20x2 µm. The prepared capillary aperture was then hydrophilized with a layer of dopamine and polyethyleneimine ((PEI), J. Mater. Chem. A, 2 (2014) 10225-10230). Dopamine hydrochloride (Sigma-Aldrich H8502) and PEI (Sigma-Aldrich product 408719, Mw 600 Da) were dissolved in a buffer containing Tris (hydroxymethyl) aminomethane (pH = 8.5, 50 mM), both at a concentration of 2 mg/ml. Hydrophilization of the surface of the aperture 13a with this solution was performed by pressure perfusion of the capillary aperture with a volume of 5 ml of the solution. After drying (24h, at RT), the aperture was covered with Parafilm foil and the device was assembled. A solution containing 17.5 % (w/w) PEG 400, 15 % (w/w) PBS and 1 g of yeast homogenate from *S*. *cerevisiae* was applied to the first chamber 11 of the device. After stirring at 8 rpm for 20 minutes at 10°C the Parafilm foil was removed and the device was centrifuged at 2500 g for 10 minutes at 10°C in a swinging rotor. Subsequently the PEG phase from the first chamber of the device 11 and the aqueous phase from the second chamber of the device 12 were analyzed by a spectrophotometer at wavelength of 340 nm following the rate of NADH⁺. From the absorbance was calculated that the enzyme recovery reached 97.7 %.

### Example 13

The same arrangement as in examples 1-12, but the emulsion was kept in motion either by immersing into sonicated water bath (Branson Ultrasonics CPX Series) or by shaking on IKA KS 130 orbital shaker (800/min) instead of vortexing.

### Example 14

The same arrangement as in examples 1, 2, 3, 5 and 8, but the hydrophobisation of aperture was achieved by embedding polytetrafluorethylene dispersion (No. 665800 Sigma-Aldrich) on the aperture surface instead of silanization.

### Industrial applicability:

The device uses the principle of a capillary aperture for the passage of a fraction of the separated system. The device may in some embodiments allow parallel processing of many samples. The device is particularly suitable for use within pre-separations and separations of liquid-liquid systems. The device allows the separation of very low volume samples, for example in the order of units of microliters to tens of nanoliters. The devices with a serial arrangement of chambers also allows complex multistage separations with a combination of separation methods, which may include chromatography or solid phase extraction (SPE) utilizing antibodies, affinity agents, hydrophobic agents, hydrophilic agents, ionic agents or chelating agents, magnetic components, or components based on imprinted polymers, or combinations thereof.

## Claims

1. A method of sample separation in a liquid-liquid system using a device comprising at least one first chamber (11, 21b, 41, 51b, 61) with a U- or V-shaped bottom, wherein at least one aperture (13a, 13b, 23b, 43, 53b, 63) with a diameter within the range of 1 to 100 µm, preferably 1 to 40 µm, is provided in the first chamber and wherein at least the surface of each aperture (13a, 13b, 23b, 43, 53b, 63) is hydrophilized or hydrophobized, wherein the device further comprises a second chamber (12, 22, 42, 52, 62) surrounding the outside of the bottom of the first chamber,
said method containing the following steps:
- introducing a system containing immiscible liquids into the first chamber with the hydrophilized or hydrophobized surface of at least the aperture of the first chamber,
- introducing a fluid sample into the first chamber; this step can be performed together with the step of introducing the system containing immiscible liquids or subsequently to the step of introducing the system containing immiscible liquids, or prior to the step of introducing the system containing immiscible liquids,
- optional step of emulsification and subsequent phase stabilization,
- application of pressure force on the system in the first chamber causing the liquid fraction having the same chemical hydrophilic or hydrophobic nature, respectively, as the hydrophilic or hydrophobic nature of the aperture surface, respectively, to pass through the aperture into the next chamber, and causing the retention of the liquid fraction having the opposite chemical hydrophilic or hydrophobic nature, respectively, than the hydrophilic of hydrophobic nature of the aperture surface, respectively.

2. The method according to claim 1, wherein the first chamber is closable, preferably by a lid, a membrane or a foil.

3. The method according to any one of the preceding claims, wherein the surface of the aperture (13a, 13b, 23b, 43, 53b, 63) as well as the surface of the bottom of the first chamber (11, 21b, 41, 51b, 61) are hydrophilized or hydrophobized, wherein the bottom is at least the inner surface area of the first chamber in which the said at least one aperture is located; or the surface of the aperture (13a, 13b, 23b, 43, 53b, 63) as well as the inner surface of the first chamber (11, 21b, 41, 51b, 61) are hydrophilized or hydrophobized.

4. The method according to any one of the preceding claims, wherein the material of the chambers is plastic, preferably selected from polycarbonate; polyolefins such as polyethylene, polypropylene; polystyrene; polyvinyl chloride; and fluorinated polymers; such as polytetrafluoroethylene.

5. The method according to any one of the preceding claims, wherein the device is provided with at least one ventilation opening (14, 24, 34a, 34b, 34c, 34d, 64) located in the first and/or second chamber of the device; preferably the ventilation opening (14, 24, 34a, 34b, 34c, 34d, 64) is located between the edge furthest from the bottom of the chamber and half of the distance between the bottom and the edge of the chamber.

6. The method according to any one of the preceding claims, wherein the device contains a plurality of first chambers (41, 51a, 51b) and a plurality of second chambers (42, 52), wherein preferably the first chambers (41, 51a, 51b) are arranged in a first holder to form a first chamber system and second chambers (42, 52) in a second holder to form a second chamber system, and the first chamber system is inserted into the second chamber system.

7. The method according to any one of the preceding claims, wherein the device contains a plurality of first chambers (21a, 21b, 51a, 51b) inserted into each other, so that in N first chambers, each of (N-1) first chambers surrounds the outside of the bottom of the preceding first chamber in the direction of the flow of liquids through the device, and the outside of the bottom of the last first chamber is surrounded by a second chamber (22, 52), and
the method contains the step of:
- introducing a system containing immiscible liquids into an arrangement of a plurality of first chambers, wherein at least one of the first chambers has a hydrophilized or hydrophobized surface of at least the aperture.

8. The method according to claim 7, wherein at least one of the first chambers is the first chamber (21b, 5 1b) having at least an aperture (23b, 53b) with a hydrophilized or hydrophobized surface, and wherein the further first chambers (21a, 51a) are chambers having a V-shaped or U-shaped bottom containing at least one aperture with a diameter in the range of 1 to 100 µm, preferably 1 to 40 µm.

9. The method according to claim 8, wherein the said further first chambers (21a, 5 1a) do not have any surface adjustment.

10. The method according to claim 8, wherein the said further first chambers (21a, 51a) have at least part of the inner surface, preferably at least the surface of the aperture (23a, 53a), modified by separating means suitable for binding at least one component of a sample.

11. The method according to claim 10, wherein the separating means are selected from antibodies, affinity agents, hydrophobic agents, hydrophilic agents, ionic agents, chelating agents, magnetic components, components based on imprinted polymers, and combinations thereof.

12. The method according to any one of claims 6 to 10, wherein the holder(s) with the first chambers and the holder with the second chambers are multi-well plates, provided with apertures in the bottoms of the wells representing the first chambers, and the plates are arranged so that the wells representing the second chambers surround the outside of the bottom of the wells representing the first chambers.

13. The method according to any one of the preceding claims, wherein the sample is a liquid sample or a gas sample.

## Patentansprüche

1. Verfahren zur Probentrennung in einem Flüssigkeit-Flüssigkeit-System unter Verwendung einer Vorrichtung, die mindestens eine erste Kammer (11, 21b, 41, 51b, 61) mit einem U- oder V-förmigen Boden umfasst, wobei mindestens eine Öffnung (13a, 13b, 23b, 43, 53b, 63) mit einem Durchmesser im Bereich von 1 bis 100 µm, vorzugsweise 1 bis 40 µm, in der ersten Kammer vorgesehen ist und wobei zumindest die Oberfläche jeder Öffnung (13a, 13b, 23b , 43, 53b, 63) hydrophilisiert oder hydrophobiert ist, wobei die Vorrichtung weiterhin eine zweite Kammer (12, 22, 42, 52, 62) umfasst, die die Außenseite des Bodens der ersten Kammer umgibt,
wobei das Verfahren die folgenden Schritte enthält:
- Einbringen eines nichtmischbare Flüssigkeiten enthaltenden Systems in die erste Kammer mit der hydrophilisierten oder hydrophobierten Oberfläche zumindest der Öffnung der ersten Kammer,
- Einbringen einer Flüssigkeitsprobe in die erste Kammer; dieser Schritt kann zusammen mit dem Schritt des Einbringens des Systems, das nichtmischbare Flüssigkeiten enthält, oder nach dem Schritt des Einbringens des Systems, das nichtmischbare Flüssigkeiten enthält, oder vor dem Schritt des Einbringens des Systems, das nichtmischbare Flüssigkeiten enthält, durchgeführt werden,
- optionaler Schritt der Emulgierung und anschließenden Phasenstabilisierung,
- Ausüben einer Druckkraft auf das System in der ersten Kammer, wodurch bewirkt wird, dass der flüssige Anteil mit der gleichen chemischen hydrophilen bzw. hydrophoben Natur wie die hydrophile bzw. hydrophobe Natur der Öffnungsoberfläche durch die Öffnung in die nächste Kammer gelangt, und dass der flüssige Anteil, der die entgegengesetzte chemische hydrophile bzw. hydrophobe Natur aufweist als die hydrophile bzw. hydrophobe Natur der Öffnungsoberfläche in der ersten Kammer zurückgehalten ist.

2. Verfahren nach Anspruch 1, wobei die erste Kammer verschließbar ist, vorzugsweise durch einen Deckel, eine Membran oder eine Folie.

3. Verfahren nach einem der vorhergehenden Ansprüche, wobei die Oberfläche der Öffnung (13a, 13b, 23b, 43, 53b, 63) sowie die Oberfläche des Bodens der ersten Kammer (11, 21b, 41, 51b, 61) hydrophilisiert oder hydrophobiert sind, wobei der Boden mindestens der innere Oberflächenbereich der ersten Kammer ist, in dem sich die mindestens eine Öffnung befindet; oder die Oberfläche der Öffnung (13a, 13b, 23b, 43, 53b, 63) sowie die Innenoberfläche der ersten Kammer (11, 21b, 41, 51b, 61) hydrophilisiert oder hydrophobiert sind.

4. Verfahren nach einem der vorhergehenden Ansprüche, wobei das Material der Kammern Kunststoff ist, vorzugsweise ausgewählt aus Polycarbonat; Polyolefine wie Polyethylen, Polypropylen; Polystyrol; Polyvinylchlorid; und fluorierte Polymere; wie Polytetrafluorethylen.

5. Verfahren nach einem der vorhergehenden Ansprüche, wobei die Vorrichtung mit mindestens einer Belüftungsöffnung (14, 24, 34a, 34b, 34c, 34d, 64) versehen ist, die sich in der ersten und/oder zweiten Kammer der Vorrichtung befindet; vorzugsweise liegt die Belüftungsöffnung (14, 24, 34a, 34b, 34c, 34d, 64) zwischen dem am weitesten vom Boden der Kammer entfernten Rand und der Hälfte des Abstands zwischen dem Boden und dem Rand der Kammer.

6. Verfahren nach einem der vorhergehenden Ansprüche, wobei die Vorrichtung mehrere erste Kammern (41, 51a, 51b) und mehrere zweite Kammern (42, 52) enthält, wobei vorzugsweise die ersten Kammern (41, 51a, 51b) in einer ersten Halterung zu einem ersten Kammersystem und zweite Kammern (42, 52) in einer zweiten Halterung zu einem zweiten Kammersystem angeordnet sind und das erste Kammersystem in das zweite Kammersystem eingesetzt wird.

7. Verfahren nach einem der vorhergehenden Ansprüche, wobei die Vorrichtung mehrere ineinander gesteckte erste Kammern (21a, 21b, 51a, 51b) enthält, so dass in N ersten Kammern, jede von (N-1) ersten Kammern umgibt die Außenseite des Bodens der in der Richtung des Flüssigkeitsflusses durch die Vorrichtung vorangehenden ersten Kammer, und die Außenseite des Bodens der letzten ersten Kammer ist von einer zweiten Kammer (22, 52) umgeben, und
das Verfahren enthält den Schritt:
- Einbringen eines Systems, das nichtmischbare Flüssigkeiten enthält, in eine Anordnung mehrerer erster Kammern, wobei mindestens eine der ersten Kammern eine hydrophilisierte oder hydrophobierte Oberfläche mindestens der Öffnung aufweist.

8. Verfahren nach Anspruch 7, wobei mindestens eine der ersten Kammern die erste Kammer (21b, 51b) ist, die mindestens eine Öffnung (23b, 53b) mit einer hydrophilisierten oder hydrophobierten Oberfläche aufweist, und wobei die weiteren ersten Kammern (21a, 51a) sind Kammern mit V-förmigem oder U-förmigem Boden, die mindestens eine Öffnung mit einem Durchmesser im Bereich von 1 bis 100 µm, vorzugsweise 1 bis 40 µm, enthalten.

9. Verfahren nach Anspruch 8, wobei die weiteren ersten Kammern (21a, 51a) keine Oberflächenanpassung aufweisen.

10. Verfahren nach Anspruch 8, wobei die weiteren ersten Kammern (21a, 51a) zumindest einen Teil der Innenoberfläche, vorzugsweise zumindest die Oberfläche der Öffnung (23a, 53a), durch zur Bindung von mindestens einer Komponente einer Probe geeignete Trennmittel modifiziert haben.

11. Verfahren nach Anspruch 10, wobei die Trennmittel ausgewählt sind aus Antikörpern, Affinitätsmitteln, hydrophoben Mitteln, hydrophilen Mitteln, ionischen Mitteln, Chelatbildnern, magnetischen Komponenten, Komponenten auf Basis geprägter Polymere und Kombinationen davon.

12. Verfahren nach einem der Ansprüche 6 bis 10, wobei der/die Halter mit den ersten Kammern und der Halter mit den zweiten Kammern Multiwellplatten sind, die mit Öffnungen in den Böden der Wells versehen sind, die die ersten Kammern darstellen, und die Platten sind so angeordnet, dass die Wells, die die zweiten Kammern darstellen, die Außenseite des Bodens der Wells umgeben, die die ersten Kammern darstellen.

13. Verfahren nach einem der vorhergehenden Ansprüche, wobei die Probe eine Flüssigkeitsprobe oder eine Gasprobe ist.

## Revendications

1. Procédé de séparation d'échantillons dans un système liquide-liquide utilisant un dispositif comprenant au moins une première chambre (11, 21b, 41, 51b, 61) avec un fond en forme de U ou de V, où au moins une ouverture (13a, 13b, 23b, 43, 53b, 63) avec un diamètre compris dans la plage de 1 à 100 µm, de préférence de 1 à 40 µm, est prévue dans la première chambre et où au moins la surface de chaque ouverture (13a, 13b, 23b, 43, 53b, 63) est hydrophilisée ou hydrophobisée, ledit dispositif comprenant en outre une deuxième chambre (12, 22, 42, 52, 62) entourant l'extérieur du fond de la première chambre,
ledit procédé comprenant les étapes suivantes :
- introduire un système contenant des liquides non miscibles dans la première chambre avec la surface hydrophile ou hydrophobe d'au moins l'ouverture de la première chambre,
- introduire un échantillon de fluide dans la première chambre; cette étape peut être réalisée conjointement à l'étape d'introduction du système contenant des liquides non miscibles ou postérieurement à l'étape d'introduction du système contenant des liquides non miscibles, ou avant l'étape d'introduction du système contenant des liquides non miscibles,
- étape optionnelle d'émulsification et ultérieurement de stabilisation des phases,
- application d'une force de pression sur le système dans la première chambre provoquant le passage de la fraction liquide ayant la même nature chimique hydrophile ou hydrophobe, respectivement, que la nature hydrophile ou hydrophobe de la surface de l'ouverture, respectivement, à travers l'ouverture dans la chambre suivante, et la rétention de la fraction liquide ayant la nature chimique hydrophile ou hydrophobe, respectivement, opposée à la nature hydrophile ou hydrophobe de la surface de l'ouverture, respectivement.

2. Procédé selon la revendication 1, où la première chambre est fermable, de préférence par un couvercle, une membrane ou une feuille.

3. Procédé selon l'une quelconque des revendications précédentes, où la surface de l'ouverture (13a, 13b, 23b, 43, 53b, 63) ainsi que la surface du fond de la première chambre (11, 21b, 41, 51b, 61) sont hydrophilisées ou hydrophobisées, le fond étant au moins la surface interne de la première chambre dans laquelle ladite au moins une ouverture est située; ou la surface de l'ouverture (13a, 13b, 23b, 43, 53b, 63) ainsi que la surface interne de la première chambre (11, 21b, 41, 51b, 61) sont hydrophilisées ou hydrophobisées.

4. Procédé selon l'une quelconque des revendications précédentes, où le matériau des chambres est du plastique, de préférence choisi parmi le polycarbonate; les polyoléfines telles que le polyéthylène, le polypropylène; le polystyrène; chlorure de polyvinyle; et polymères fluorés; tel que le polytétrafluoroéthylène.

5. Procédé selon l'une quelconque des revendications précédentes, où le dispositif est pourvu d'au moins une ouverture de ventilation (14, 24, 34a, 34b, 34c, 34d, 64) située dans la première et/ou la deuxième chambre du appareil; de préférence l'ouverture de ventilation (14, 24, 34a, 34b, 34c, 34d, 64) est située entre le bord le plus éloigné du fond de la chambre et la moitié de la distance entre le fond et le bord de la chambre.

6. Procédé selon l'une quelconque des revendications précédentes, où le dispositif contient une pluralité de premières chambres (41, 51a, 51b) et une pluralité de secondes chambres (42, 52), où de préférence les premières chambres (41, 51a, 51b) sont disposées dans un premier support pour former un premier système de chambres et des secondes chambres (42, 52) sont disposées dans un deuxième support pour former un deuxième système de chambres, et le premier système de chambres est inséré dans le deuxième système de chambres.

7. Procédé selon l'une quelconque des revendications précédentes, où le dispositif contient une pluralité de premières chambres (21a, 21b, 51a, 51b) insérées les unes dans les autres, de sorte que dans N premières chambres, chacune de (N-1) des premières chambres entourent l'extérieur du fond de la première chambre précédente dans la direction de l'écoulement des liquides à travers le dispositif, et l'extérieur du fond de la dernière première chambre est entouré par une seconde chambre (22, 52), et la méthode contient l'étape suivante :
- introduire un système contenant des liquides non miscibles dans un agencement d'une pluralité de premières chambres, au moins l'une des premières chambres ayant une surface hydrophilisée ou hydrophobisée d'au moins l'ouverture.

8. Procédé selon la revendication 7, où au moins l'une des premières chambres est la première chambre (21b, 51b) ayant au moins une ouverture (23b, 53b) avec une surface hydrophilisée ou hydrophobisée, et où les autres premières chambres (21b, 51b) 21a, 51a) sont des chambres ayant un fond en forme de V ou en forme de U contenant au moins une ouverture d'un diamètre compris dans la plage de 1 à 100 µm, de préférence de 1 à 40 µm.

9. Procédé selon la revendication 8, où lesdites autres premières chambres (21a, 51a) ne présentent aucun réglage de surface.

10. Procédé selon la revendication 8, où lesdites autres premières chambres (21a, 51a) ont au moins une partie de la surface interne, de préférence au moins la surface de l'ouverture (23a, 53a), modifiée par des moyens de séparation adaptés à la liaison à au moins un composant de l'échantillon.

11. Procédé selon la revendication 10, où les moyens de séparation sont choisis parmi les anticorps, les agents d'affinité, les agents hydrophobes, les agents hydrophiles, les agents ioniques, les agents chélatants, les composants magnétiques, les composants à base de polymères à empreintes, et leurs combinaisons.

12. Procédé selon l'une quelconque des revendications 6 à 10, où le(s) support(s) avec les premières chambres et le support avec les secondes chambres sont des plaques multipuits, munies d'ouvertures dans les fonds des puits représentant les premières chambres, et les plaques sont disposées de manière à ce que les puits représentant les secondes chambres entourent l'extérieur du fond des puits représentant les premières chambres.

13. Procédé selon l'une quelconque des revendications précédentes, où l'échantillon est un échantillon liquide ou un échantillon gazeux.
